# EUROPÄISCHE PATENTSCHRIFT

(11) **EP 0 609 527 B1**
(45) Veröffentlichungstag und Bekanntmachung des Hinweises auf die Patenterteilung: **25.02.1998**
(21) Anmeldenummer: 93120014.1
(22) Anmeldetag: 11.12.1993
(51) Int. Cl.: F01N 7/00

(54) **Verfahren zur Überprüfung der Funktionstüchtigkeit von Abgaskatalysatoren**
Method for examining the performance of exhaust gas catalyzer
Méthode pour examiner le bon fonctionnement des catalyseurs d'échappement

(30) Priorität: 02.02.1993 DE 4302779
(43) Veröffentlichungstag der Anmeldung: 10.08.1994
(73) Patentinhaber: Dr.Ing.h.c. F. Porsche Aktiengesellschaft, 70435 Stuttgart (DE)
(72) Erfinder: Schwarzenthal, Dietmar, D-51467 Bergisch Gladbach (DE); Pelters, Stephan, D-75288 Tiefenbronn (DE)

(56) Entgegenhaltungen:
- EP-A- 0 442 648
- DE-A- 3 811 732
- DE-A- 4 100 397
- JP-A- 4 060 106
- US-A- 5 060 473

## Beschreibung

Die Erfindung betrifft ein Verfahren zur Überprüfung der Funktionstüchtigkeit von im Abgasstrang einer Brennkraftmaschine eingesetzten Abgaskatalysatoren.

Aus DE-40 27 207 A ist ein Überwachungsverfahren mit mehreren, einem Katalysator zugeordneten Temperaturmeßfühlern bekannt, bei dem ein Temperaturmittelwert aus einer langfristigen Beobachtung der Temperaturmeßgrößen gebildet und mit vorgegebenen Grenzwerten verglichen wird.

Aus der DE 41 00 397 A1 ist ein Verfahren zur Überwachung des Konvertierungsgrades eines Abgaskatalysators einer Brennkraftmaschine mit folgenden Schritten bekannt:
· Betreiben der Brennkraftmaschine in einem Fahrbetrieb als ersten Betriebszustand und Erfassen von Abgastemperaturwerten als Parameter an zwei Meßstellen im Abgasstrang und Weiterleiten dieser Parameter an ein Steuergerät, anschließend
· Einstellen derBrannkraftmaschine auf einen Schubbetrieb als zweiten Betriebszustand durch Änderung des Drosselklappenwinkels und Erkennen dieses Betriebszustandes anhand eines Drehzahlsignales und des Drosselklappenwinkels, anschließend
· Beaufschlagen des Abgaskatalysators mit einem dem Schubbetrieb nicht entsprechenden Abgasimpuls durch Zufuhr eine durch einen Zündaussetzer erzeugten, unverbrannten Kraftstoff-Luft-Gemisches, und
· Erfassen des infolge der chemischen Reaktion des Gemisches am Katalysator einstellenden Abgastemperaturparameters an beiden Meßstellen, und
· Bilden einer Parameterdifferenz aus den vor und nach dem Beaufschlagen gemessenen Temperaturwerten und Speichern eines dieser Differenz entsprechenden Signales in einem Speicher des Steuergerätes, und abschließend
· Auswerten des dem Konvertierungsgrad entsprechenden Signales und gegebenenfalls Auslösen eines an den Speicher angeschlossenen Signalgebers.

Darüber hinaus zeigt die Veröffentlichung "Patent Abstracts of Japan, Publication Nr. JP4060106" eine Steuereinrichtung für eine Brennkraftmaschine, die den Zustandes eines Abgaskatalysators bestimmt. Die Steuereinrichtung weist neben einer Kraftstoffzumeßeinrichtung zur Einstellung eines Kraftstoff-Luft-Gemisches eine Vorrichtung zur Bestimmung, ob sich die Brennkraftmaschine in einem Normalbetrieb befindet, und eine Temperaturmeßeinrichtung zur Bestimmung der Temperatur des Abgaskatalysators auf. Ferner ist eine Recheneinrichtung zur Bestimmung des Gradienten der Temperatur des Abgaskatalysators im Normalbetrieb zu einer Temperatur des Abgaskatalysators nach Anreicherung des Kraftstoff-Luft-Gemisches vorgesehen. Eine Verschlechterungs-Bestimmungseinrichtung schließt auf eine Verschlechterung des Abgaskatalysators, wenn der von der Recheneinrichtung ermittelten Gradienten außerhalb eines vorgegebenen Wertebereich liegt und erzeugt daraufhin ein Alarmsignal.

Der Erfindung liegt die Aufgabe zugrunde, ein Verfahren zur Überprüfung der Funktionstüchtigkeit von Abgaskatalysatoren anzugeben, welches rasch und zuverlässig Rückschlüsse auf den Alterungszustand, d.h. die Konvertierungsrate der Katalysatoren zuläßt.

Die Lösung dieser Aufgabe gelingt mit den Merkmalen des Patentanspruches 1.
Vorteilhafte Ausgestaltungen sind in den Unteransprüchen benannt.

Wenn bei einer Brennkraftmaschine ein Verfahren gemäß dem Patentanspruch 1 angewendet wird, so ermöglicht dieses innerhalb weniger Sekunden eine aktuelle Information über die katalytische Konvertierungsrate des Abgaskatalysators. Das Verfahren ist in verschiedenen Betriebszuständen der Brennkraftmaschine bzw. eines mit der Brennkraftmaschine ausgerüsteten Kraftfahrzeuges durchführbar, beispielsweise im Leerlauf, im Schubbetrieb oder in einem beliebigen Teillastbetriebspunkt.

Zunächst wird die Brennkraftmaschine während einer ersten Zeitperiode betrieben und ein erster Betriebszustand wird von einem elektronischen Steuergerät anhand von aktuell erfassten Parametern festgestellt. Hierzu müssen diese Parameter während einer festgelegten Vorlaufzeit bestimmten Randbedingungen genügen. In diesem ersten Betriebszustand liegen konditionierte Bedingungen von Brennkraftmaschine und Abgasstrang vor, so daß eine ausreichende Reproduzierbarkeit im realen Fahrbetrieb gegeben ist. Die hierbei erfassten Parameter können z.B. Motorlast oder -drehzahl sein, welche während der Vorlaufzeit bestimmten Last- und/oder Drehzahlkollektiven oder Bereichen oder Grenzwerten genügen müssen.

Nach dem Feststellen dieses ersten Betriebszustandes wird die Brennkraftmaschine während einer zweiten Zeitperiode weiterhin in diesem ersten Betriebszustand betrieben, wenn zumindest einer der erfassten Parameter einem vorgegebenen Sollwert entspricht oder es wird durch Änderung mindestens eines Wertes eines erfassten Parameters der Brennkraftmaschine ein zweiter Betriebszustand eingestellt, z.B. durch Verändern des Drosselklappenwinkels auf Schubbetrieb durch die das Kraftfahrzeug bedienende Person. Des weiteren kann beispielsweise ein Leerlaufbetrieb eingestellt werden. Dieser Zustand wird anschließend durch Vergleich des Parameterwertes mit einem vorgegebenen Sollwert erkannt. Der zweite Betriebszustand kann auch ein beliebiger Teillastbetriebspunkt sein, in welchem der Parameter dem Sollwert genügt.

Als weiterer Schritt wird in der zweiten Zeitperiode während des ersten Betriebszustandes oder nach dem Erkennen des zweiten Betriebszustandes der Abgaskatalysator mit einem diesem Zustand nicht entsprechenden unterstöchiometrischen Abgasimpuls der Brennkraftmaschine beaufschlagt. Dieser Impuls wird durch Kraftstoffzufuhr bei abgeschalteter Zündung erzeugt.

In einem beliebigen Teillastpunkt kann der Abgasimpuls ebenfalls durch eine der vorgenannten Möglichkeiten mittels der Kraftstoffmenge bzw. der Zündung erzeugt werden.

Der nächste Schritt besteht im Erfassen mindestens eines sich infolge des Abgasimpulses ändernden, ersten Parameters im Abgasstrang der Brennkraftmaschine. Dieser Parameter kann z.B. mindestens eine im oder hinter dem oder den Abgaskatalysatoren von einem Temperatursensor erfaßte Temperatur sein, die sich z.B. infolge eines kurzzeitigen fetten Fahrbetriebes erhöht.
Alternativ dazu kann die Konzentration eines von einer Gassonde erfaßten Gases gemessen werden, z.B. die Sauerstoffkonzentration mittels einer Lambdasonde.

Bevor eine Auswertung der Änderung dieses ersten Parameterwertes erfolgt, wird als nächster Schritt ein Abbruchkriterium abgeprüft. Hierdurch wird vermieden, daß eine Auswertung stattfindet, obwohl sich während der Durchführung des Verfahrens bestimmte Parameter aufgrund unvorhergesehener Ereignisse derart verändert haben, daß eine verlässliche Aussage über die Konvertierungsrate nicht mehr möglich wäre.
Aus mindestens einem vor oder während des Beaufschlagens mit dem Abgasimpuls erfassten Parameterwert und dessen Wert nach dem Beaufschlagen wird eine erste Parameterdifferenz gebildet und mit einem vorgegebenen, ersten Solldifferenzbereich verglichen. Ändert sich z.B. im Schubbetrieb durch abruptes Bremsen während des vorgenannten Zeitraumes die Drehzahl in unzulässiger Weise, wird das Verfahren abgebrochen. Liegt diese Parameterdifferenz innerhalb des Solldifferenzbereiches, so erfolgt abschließend eine Auswertung des ersten Parameters durch Vergleich seiner Änderung mit einer vorgegebenen Solländerung.
Nach einmaliger oder mehrmaliger Durchführung der vorgenannten Verfahrensschritte wird bei unzulässiger Abweichung von der Solländerung ein die Funktionsuntüchtigkeit des Abgaskatalysators anzeigendes Signal ausgelöst und im Steuergerät abgespeichert sowie beispielsweise als Fehlermeldung in der Instrumententafel des Kraftfahrzeuges angezeigt.

Die Funktionsuntüchtigkeit ist also nicht durch den Totalausfall der Konvertierung, sondern durch vorgegebene Grenzwerte definiert.

In besonders einfacher und zeitsparender Art und Weise kann die Auswertung durch Vergleich des nach dem Beaufschlagen erfassten Wertes des ersten Parameters mit einem vorgegebenen,
abgespeicherten Sollwert erfolgen, indem die durch diesen Vergleich ermittelte Änderung mit einem Solländerungsbereich verglichen wird.
In Abwandlung davon kann die Auswertung durch direkte Messung der Änderung des Wertes des ersten Parameters erfolgen, indem dessen Wert zusätzlich in der zweiten Zeitperiode erfaßt wird. Aus beiden Werten wird eine zweite Parameterdifferenz gebildet und mit einem vorgegebenen, abgespeicherten zweiten Solldifferenzbereich verglichen.

Die in den Abgasstrang eingesetzten Abgaskatalysatoren können als relativ großvolumige Hauptkatalysatoren oder auch als vergleichweise kleinvolumige Startkatalysatoren verwendet werden.

Das erfindungsgemäße Verfahren beansprucht zu seiner Durchführung lediglich einige Sekunden, so daß nachteilige Auswirkungen des kurzzeitig eingebrachten Abgasimpulses im Fahrbetrieb nicht spürbar sind.
Wird der Abgasimpuls durch Zusatzeinspritzung von Kraftstoff erzeugt, so ist die hierfür benötige Kraftstoffmenge und die infolgedessen abgegebene Abgasmenge vernachlässigbar klein. Durch Einstellen der Randbedingungen bzw. der Sollanderungen im Steuergerät ist eine individuelle Anpassung an verschiedene Brennkraftmaschinen, an verschiedene Katalysatoren mit ihren spezifischen Alterungseigenschaften sowie an verschärfte gesetzgeberische Bedingungen möglich.

Eine Ausführungsbeispiel der Erfindung wird nachstehend anhand einer Zeichnung näher erläutert.

Es zeigen:

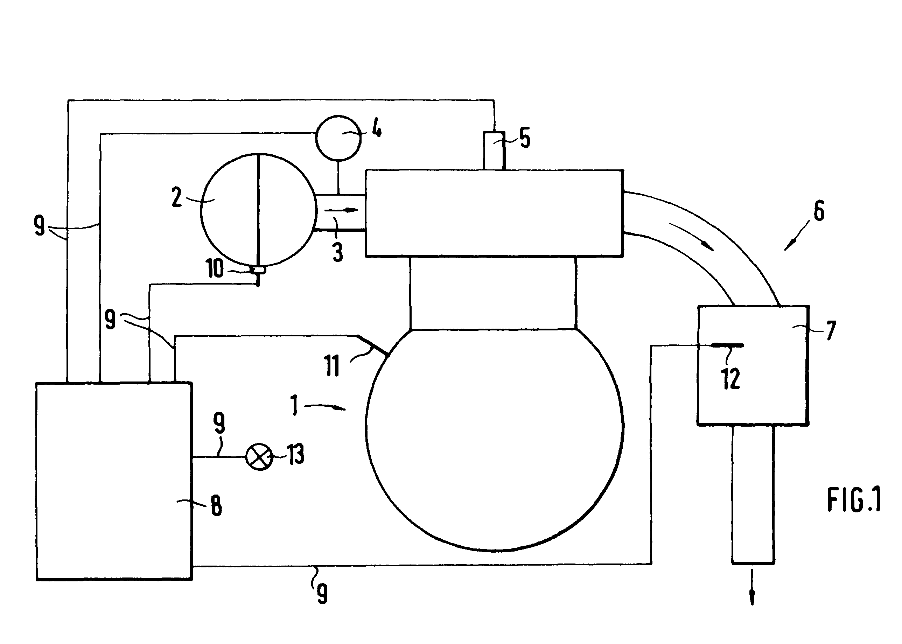

- Fig.1: schematisch eine Brennkraftmaschine mit Abgasstrang und
- Fig.2: schematisch den zeitlichen Verlauf eines Parameterwertes.

Eine in ein nicht gezeigtes Kraftfahrzeug eingesetzte Brennkraftmaschine 1 weist eine Ansauganlage 2 und eine auf Ansaugrohre 3 wirkende Einspritzanlage 4 für Kraftstoff auf. Zur Zündung des zugeführten Luft/Kraftstoffgemisches dienen Zündkürzen 5, das entsprechende Abgas wird über einen Abgasstrang 6, welcher einen Abgaskatalysator 7 aufweist, abgeführt.
Ein elektronisches Steuergerät 8 ist über signal führende Leitungen 9 mit einem Winkelsensor 10 zur Erfassung des Drosselklappenwinkels DW als Lastsignal L, mit einem Drehzahlsensor 11 zur Erfassung der Brennkraftmaschinendrehzahl N, mit der Einspritzanlage 4, den Zündkerzen 5 und einem Temperatursensor 12 zur Erfassung der Abgastemperatur T verbunden.

Während des Betriebes der Brennkraftmaschine 1 werden vom Steuergerät 8 laufend Werte der von den Sensoren 10 und 11 erfassten Parameter Drosselklappenwinkel DW und Drehzahl N aufgenommen. Genügen diese Werte während einer ersten Zeitperiode t12 von z.B. 60 Sekunden bestimmten, im Steuergerät 8 gespeicherten Last-, Drehzahl- und Temperaturkollektiven, so stellt dieses Steuergerät 8 am Ende der Zeitperiode t12 zu einem Zeitpunkt t2 einen ersten Betriebszutand B1 fest.
Brennkraftmaschine 1 und Abgasstrang 6 sind jetzt für die Fortführung des Verfahrens konditioniert.

Im weiteren Verlauf des Betriebes, in dem das durch die Zeitperiode t12 definierte Zeitfenster ständig erneuert wird, ändert sich durch Rücknahme des Drosselklappenwinkels DW auf einen Wert, der dem Schubbetrieb entspricht, der Betriebszustand der Brennkraftmaschine. Zu diesem Wert ist im Steuergerät 8 ein Sollwert gespeichert. Durch ständigen Vergleich des aktuell erfassten Drosselklappenwinkels DW mit diesem Sollwert wird bei Erreichen dieses Sollwertes vom Steuergerät 8 als zweiter Betriebszustand B2 ein Schubbetrieb festgestellt, währenddessen die Einspritzanlage 4 abgeschaltet wird. Anschließend wird für zwei Umdrehungen der Kurbelwelle die Zündung eines Zylinders der Brennkraftmaschine abgeschaltet, wobei während der zweiten Umdrehung das diesem Zylinder zugeordnete Einspritzventil der Einspritzanlage 4 vom Steuergerät 8 aktiviert wird. Hierdurch wird ein kurzzeitiger Abgasimpuls erzeugt, der einem regulären Schubbetrieb nicht entspricht. Die eingespritzte Kraftstoffmenge wird gemeinsam mit dem Abgas der übrigen, regulär betriebenen Zylinder dem Abgaskatalysator 7 zugeführt und verursacht eine exotherme Reaktion an dessen katalytischer Oberfläche. Daraufhin erfasst der Temperatursensor 12 einen erhöhten Wert für die Abgastemperatur T.

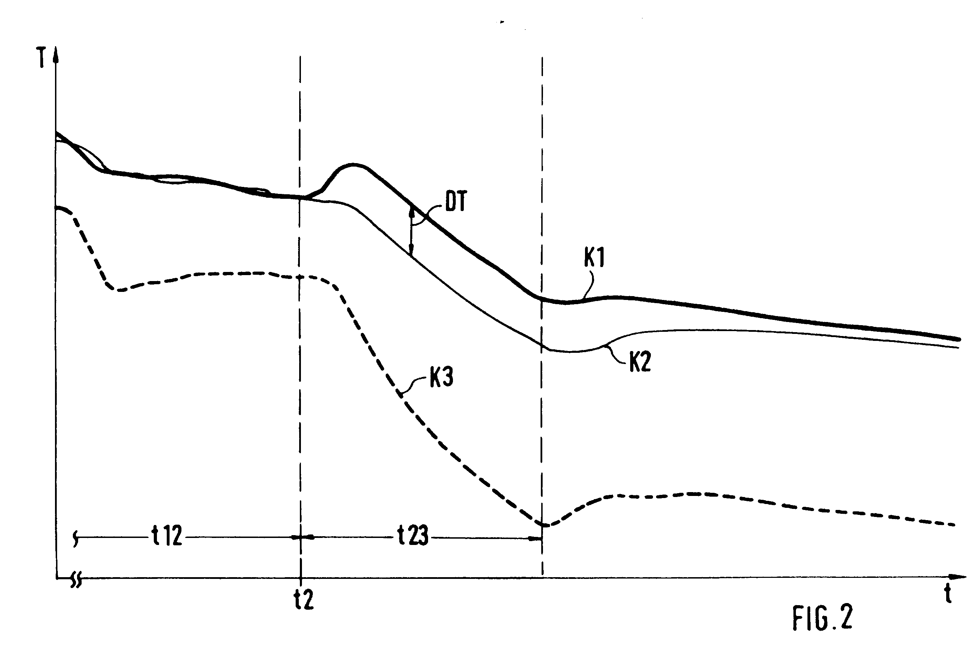

Der zeitliche Verlauf dieser Temperatur T ist in Fig. 2 in Form eines Diagrammes wiedergegeben, auf dessen Abszisse die Zeit t und auf dessen Ordinate die vom Sensor 12 erfasste Abgastemperatur T aufgetragen ist. Eine erste Kurve K1 zeigt den Temperaturverlauf stromab eines funktionstüchtigen Abgaskatalysators 7 mit kurzfristiger Zusatzeinspritzung von Kraftstoff, während eine zweite Kurve K2 diesen Verlauf ohne Zusatzeinspritzung darstellt. Deutlich sichtbar ist der nahezu identische Verlauf während der ersten Zeitperiode t12 bis zum Feststellen des ersten Betriebszustandes B1. Anschließend folgt die zweite Zeitperiode t23 mit einer Temperaturerhöhung DT bei Zusatzeinspritzung gegenüber Kurve K2.

Eine dritte Kurve K3 zeigt zum Vergleich den Temperaturverlauf eines Abgaskatalysators mit bereits stark beeinträchtigter Konvertierungsrate mit Zusatzeinspritzung. Trotz dieser Zusatzeinspritzung ähnelt der Kurvenverlauf dem der Kurve K2, er ist jedoch aufgrund der schlechten Konvertierungsrate deutlich zu niedrigeren Temperaturen verschoben und ist weitgehend identisch mit einem Verlauf ohne Zusatzeinspritzung. Eine verwertbare Signaldifferenz kann nicht gewonnen werden.

Im nächsten Schritt wird zur Berücksichtigung von unvorhergesehenen Änderungen von Parametern während der Durchführung dieses Verfahrens eine erste Parameterdifferenz DP1 aus dem Wert der Brennkraftmaschinendrehzahl N während des Beaufschlagens des Abgaskatalysatores 7 mit dem Abgasimpuls und dessen Wert nach diesem Beaufschlagen gebildet. Durch Vergleich mit einem vorgegeben, abgespeicherten ersten Solldifferenzbereich DPS1 stellt das Steuergerät 8 fest, ob DP1 innerhalb von DPS1 liegt. Ist dies der Fall, wird das Verfahren mit einer Auswertung fortgeführt, andernfalls abgebrochen. Zur Auswertung wird die Änderung der als erster Parameter erfassten Abgastemperatur T mit einer im Steuergerät 8 abgespeicherten Solländerung verglichen. Ergibt eine mehrmalige Durchführung dieses Verfahren in jedem Durchlauf eine unzulässige Abweichung von der Solländerung, so wird dieser Zustand in einem Fehlerspeicher des Steuergerätes 8 abgespeichert und eine Signallampe 13 betätigt.
Bei jedem Durchlaufen des Verfahrens wird dabei zur Erzielung zuverlässiger Ergebnisse die Anzahl der Kurbelwellenumdrehungen, während der die Zündung ausgeblendet ist bzw. zusätzlich eingespritzt wird, verändert, wodurch die Einspritzmenge variiert wird.

Eine schnelle Auswertung wird durch Vergleich des Wertes von T nach dem Abgasimpuls mit einem vorgegebenen Sollwert und anschließendes Vergleichen der so ermittelten Änderung mit einem Solländerungsbereich erzielt.
In Abwandlung davon kann der Wert der Abgastemperatur T zusätzlich nach dem Erkennen des zweiten Betriebszustandes B2 erfasst und abgespeichert werden. Aus diesem Wert und dem sich infolge des Abgasimpulses einstellenden Wert wird eine zweite Parameterdifferenz DP2 gebildet und mit einem vorgegebenen, zweiten Solldifferenzbereich DPS2 verglichen.

## Patentansprüche

1. Verfahren zur Überprüfung der Funktionstüchtigkeit von im Abgasstrang (6) von mit einer Brennkraftmaschine (1) ausgerüsteten Kraftfahrzeugen eingesetzten Abgaskatalysatoren (7) mit den Schritten:
a) Prüfen, ob ein erster Betriebszustand (B1) der Brennkraftmaschine (1) und des Abgasstranges (6) für einen ersten Zeitraum (t12) gegeben ist,
b) Prüfen, ob die Brennkraftmaschine (1) einen vorgegebenen zweiten Betriebszustand (B2) erreicht hat,
c) Beaufschlagen des Abgaskatalysators (7) in einem zweiten Zeitraum (t23) mit einem dem jeweiligen Betriebszustand nicht entsprechenden, unterstöchiometrischen Abgasimpuls durch Verändern von Zündung oder Kraftstoffzufuhr der Brennkraftmaschine (1),
d) Erfassen der Änderung eines Parameters des Abgasstranges (DT) während des zweiten Zeitraumes (t23),
e) Prüfen, ob die Änderung des Parameters des Abgasstranges (DT) innerhalb einer Solländerung liegt und Auslösen eines die Funktionstüchtigkeit des Abgaskatalysators anzeigenden Signales (13),
**dadurch gekennzeichnet, daß**
b1) im zweiten Betriebszustand (B2) die Kraftstoffzufuhr unterbrochen ist,
c1) der Abgasimpuls durch Kraftstoffzufuhr zur Brennkraftmaschine (1) bei abgeschalteter Zündung erzeugt wird und
d1) das Erfassen der Änderung eines Parameters des Abgasstranges (DT) während des zweiten Zeitraumes (t23) an nur einer Meßstelle im oder unterhalb des Abgaskatalysators (7) erfolgt.

2. Verfahren nach Anspruch 1, **gekennzeichnet durch** den weiteren Schritt:
d2) Prüfen, ob eine während des zweiten Zeitraumes (t23) gebildete erste Differenz (DP1) eines oder mehrerer Parameter der Brennkraftmaschine (1), die zur Feststellung eine Betriebszustandes geeignet sind, innerhalb eines vorgegebenen ersten Solldifferenzbereiches (DPS1) liegt und Abbruch dieses Verfahrens, wenn die erste Parameterdifferenz (DP1) außerhalb des Solldifferenzbereiches (DPS1) liegt, wobei der erste Solldifferenzbereich (DPS1) so gewählt ist, daß ein Überschreiten des Solldifferenzbereiches auf eine Änderung des Parameters in unzulässiger Weise schließen läßt,

3. Verfahren nach Anspruch 1 oder 2, **gekennzeichnet durch** den weiteren Schritt:
e1) Speicherung dieser Funktionsuntüchtigkeit in einem Fehlerspeicher des Steuergerätes (8), wenn die Änderung des Parameters des Abgasstranges mehrfach außerhalb der Solländerung liegt,

4. Verfahren nach Anspruch 1, 2 oder 3, **gekennzeichnet durch** den Schritt:
d) Erfassen eines Parameters des Abgasstranges (DT) nach Ablauf des zweiten Zeitraumes (t23), e) Berechnen einer Differenz des Parameters des Abgasstranges (DT) zu einem vorgegebenen Sollwert, Prüfen, ob die Differenz innerhalb eines Solländerungsbereiches liegt und Auslösen eines die Funktionstüchtigkeit des Abgaskatalysators anzeigenden Signales (13).

5. Verfahren nach Anspruch 1, 2 oder 3, **dadurch gekennzeichnet,** daß der Wert des ersten Parameters zusätzlich vor dem Abgasimpuls erfasst wird und zur Auswertung eine zweite Parameterdifferenz aus diesem Wert und dem sich infolge des Abgasimpulses einstellenden Wertes dieses Parameters gebildet wird und diese zweite Parameterdifferenz mit einem vorgegebenen, zweiten Solldifferenzbereich verglichen wird.

6. Verfahren nach Anspruch 1, 2 oder 3, **dadurch gekennzeichnet,** daß der erste Parameter mindestens eine im Abgasstrang gemessene Temperatur ist.

7. Verfahren nach Anspruch 1, 2 oder 3, **dadurch gekennzeichnet,** daß der erste Parameter die im Abgasstrang von mindestens einer Gassonde erfasste Konzentration eines Gases ist.

8. Verfahren nach Anspruch 7, **dadurch gekennzeichnet,** daß als Gassonde eine Lambdasonde verwendet wird.

9. Verfahren nach Anspruch 1, 2 oder 3, **dadurch gekennzeichnet,** daß der zweite Betriebszustand ein Schubbetrieb eines mit der Brennkraftmaschine ausgerüsteten Kraftfahrzeuges ist.

10. Verfahren nach Anspruch 1, 2 oder 3, **dadurch gekennzeichnet,** daß bei mehrmaliger Durchführung des Verfahrens die Einspritzmenge variiert wird.

11. Verfahren nach Anspruch 2, **dadurch gekennzeichnet,** daß die erste Parameterdifferenz aus Werten der Brennkraftmaschinendrehzahl oder der Motorlast gebildet wird.

## Claims

1. A method of checking the efficiency of exhaust-gas catalysts (7) used in the exhaust-gas line (6) of motor vehicles provided with an internal-combustion engine (1), comprising the steps of:
a) testing whether or not the internal-combustion engine (1) and the exhaust-gas line (6) are in a first operating state (B1) for a first time period (t12);
b) testing whether or not the internal-combustion engine (1) has reached a predetermined second operating state (B2);
c) acting on the exhaust-gas catalyst (7) in a second time period (t23) with a hypostoichiometric exhaust-gas pulse not corresponding to the respective operating state by changing the ignition or a fuel supply to the internal-combustion engine (1);
d) detecting the change in a parameter of the exhaust-gas line (DT) during the second time period (t23);
e) testing whether or not the change in the parameter of the exhaust-gas line (DT) lies within a rated change, and emitting a signal (13) indicating the efficiency of the exhaust-gas catalyst;
characterised in that
b1) the fuel supply is interrupted in the second operating state (B2),
c1) the exhaust-gas pulse is generated by a fuel supply to the internal-combustion engine (1) when the ignition is switched off, and
d1) the change in a parameter of the exhaust-gas line (DT) during the second time period (t23) is detected at only one measuring point in or below the exhaust-gas catalyst (7).

2. A method according to claim 1, characterised by the further step of:
d2) testing whether or not a first difference (DP1) between one or more parameters of the internal-combustion engine (1) formed during the second time period (t23) lies within a predetermined first rated difference range (DPS1), the parameters being suitable to determine an operating state, and terminating this method if the first parameter difference (DP1) lies outside the rated difference range (DPS1), the first rated difference range (DPS1) being selected so that exceeding of the rated difference range indicates an inadmissible change in the parameter.

3. A method according to claim 1 or 2, characterised by the further step of:
e1) storing this inefficiency in a fault memory of the control unit (8) if the change in the parameter of the exhaust-gas line is repeatedly outside the rated change.

4. A method according to claim 1, 2 or 3, characterised by the step of:
d) detecting a parameter of the exhaust-gas line (DT) after the second time period (t23) has elapsed,
e) calculating a difference between the parameter of the exhaust-gas line (DT) and a predetermined rated value, testing whether or not the difference lies within a rated change range, and emitting a signal (13) indicating the efficiency of the exhaust-gas catalyst.

5. A method according to claims 1, 2 or 3, characterised in that the value of the first parameter is additionally determined before the exhaust-gas pulse and, for evaluation, a second parameter difference is formed from this value and the value of this parameter resulting from the exhaust-gas pulse, and this second parameter difference is compared with a predetermined second rated difference range.

6. A method according to claim 1, 2 or 3, characterised in that the first parameter is at least one temperature measured in the exhaust-gas line.

7. A method according to claim 1, 2 or 3, characterised in that the first parameter is the concentration of a gas detected in the exhaust-gas line by at least one gas sensor.

8. A method according to claim 7, characterised in that a lambda sensor is used as a gas sensor.

9. A method according to claim 1, 2 or 3, characterised in that the second operating state is a trailing throttle state of a motor vehicle provided with the internal-combustion engine.

10. A method according to claim 1, 2 or 3, characterised in that the injection quantity is varied if the method is carried out repeatedly.

11. A method according to claim 2, characterised in that the first parameter difference is formed from values of the internal-combustion engine speed or the engine load.

## Revendications

1. Procédé de contrôle de l'aptitude au fonctionnement de catalyseurs pour gaz d'échappement (7), mis en oeuvre dans le système de gaz d'échappement (6), de véhicules automobiles équipés d'un moteur à combustion interne (1), comprenant les étapes consistant :
a) vérifier si l'on est en présence d'un premier état de fonctionnement (B1) du moteur à combustion interne (1) et du système de gaz d'échappement (6) pour un premier intervalle de temps (t12),
b) vérifier si le moteur à combustion interne (1) a atteint un deuxième état de fonctionnement (B2) prédéterminé,
c) solliciter le catalyseur pour gaz d'échappement (7) pendant un deuxième intervalle de temps (t23) avec une impulsion de gaz d'échappement sous-stoechiométrique ne correspondant pas à l'état de fonctionnement respectif, par une modification du processus d'allumage ou de l'apport en carburant du moteur à combustion interne (1),
d) appréhender la modification d'un paramètre du système de gaz d'échappement (DT) pendant le deuxième intervalle de temps (t23),
e) vérifier si la variation du paramètre du système de gaz d'échappement (DT) est située à l'intérieur d'une variation de consigne et déclencher un signal (13) indiquant l'aptitude au fonctionnement du catalyseur pour gaz d'échappement,
caractérisé en ce que
b1) l'apport en carburant est interrompu pendant le deuxième état de fonctionnement (B2),
c1) l'impulsion de gaz d'échappement est générée par apport de carburant au moteur à combustion interne (1), lorsque l'allumage est mis en service, et
d1) l'appréhension de la variation d'un paramètre du système de gaz d'échappement (DT) s'effectue pendant le deuxième intervalle de temps (t23) seulement en un point de mesure se trouvant dans ou sous le catalyseur pour gaz d'échappement (7).

2. Procédé selon la revendication 1, caractérisé par l'étape supplémentaire :
d2) vérifier si une première différence (DP1), constituée pendant le deuxième intervalle de temps (t23), d'un ou de plusieurs paramètres du moteur à combustion interne (1), convenant pour déterminer un état de fonctionnement, est située dans les limites d'une première plage de différences de consigne (DPS1) prédéterminée et faire cesser ce processus lorsque la première différence de paramètre (DP1) est située hors de la plage de différences de consigne (DPS1), la première plage de différences de consigne (DPS1) étant choisie telle qu'un dépassement de la plage de différences de consigne permet de conclure d'une façon non fiable qu'il y a eu variation du paramètre.

3. Procédé selon la revendication 1 ou 2, caractérisé par l'étape supplémentaire consistant à :
e1) mémoriser cette aptitude au fonctionnement dans une mémoire d'erreurs de l'appareil de commande (8), lorsque la variation du paramètre du système de gaz d'échappement se situe à plusieurs reprises hors de la variation de consigne.

4. Procédé selon la revendication 1, 2 ou 3, caractérisé par l'étape consistant à :
d) appréhender un paramètre du système de gaz d'échappement (DT) après écoulement du deuxième intervalle de temps (t23),
e) calculer une différence du paramètre du système de gaz d'échappement (DT) par rapport à une valeur de consigne prédéterminée, vérifier si la différence se situe dans les limites d'une plage de variations de consigne et déclencher un signal (13) indiquant l'aptitude au fonctionnement du catalyseur pour gaz d'échappement.

5. Procédé selon la revendication 1, 2 ou 3, caractérisé en ce que la valeur du premier paramètre est, en plus appréhendée avant l'impulsion de gaz d'échappement et en vue de l'évaluation, une deuxième différence de paramètre est constituée à partir de cette valeur et de la valeur, s'établissant suite à l'impulsion de gaz d'échappement, de ce paramètre, et cette deuxième différence de paramètre est comparée à une deuxième plage de différence de consigne, prédéterminée.

6. Procédé selon la revendication 1, 2 ou 3, caractérisé en ce que le premier paramètre est au moins une température mesurée dans le système des gaz d'échappement.

7. Procédé selon la revendication 1, 2 ou 3, caractérisé en ce que le premier paramètre est la concentration d'un gaz, appréhendée dans le système de gaz d'échappement, par au moins une sonde à gaz.

8. Procédé selon la revendication 7, caractérisé en ce qu'on utilise comme sonde à gaz une sonde Lambda.

9. Procédé selon la revendication 1, 2 ou 3, caractérisé en ce que le deuxième état de fonctionnement est un fonctionnement sur la lancée, d'un véhicule automobile équipé d'un moteur à combustion interne.

10. Procédé selon la revendication 1, 2 ou 3, caractérisé en ce que, en cas de répétition de la mise en oeuvre du procédé, on procède à une variation au niveau de la quantité de carburant injectée.

11. Procédé selon la revendication 2, caractérisé en ce que la première différence de paramètre est constituée à partir de valeurs issues de la vitesse de rotation du moteur à combustion interne ou de la charge moteur.
